(19)

**Europäisches Patentamt**

**European Patent Office**

**Office européen des brevets**

(11) **EP 2 758 816 B1**

(12) **FASCICULE DE BREVET EUROPEEN**

(45) Date de publication et mention
de la délivrance du brevet:
**25.11.2015 Bulletin 2015/48**

(21) Numéro de dépôt: **12759468.7**

(22) Date de dépôt: **18.09.2012**

(51) Int Cl.:
*G02B 6/02* (2006.01)    *C03B 37/012* (2006.01)
*G02B 6/036* (2006.01)

(86) Numéro de dépôt international:
**PCT/EP2012/068370**

(87) Numéro de publication internationale:
**WO 2013/041533 (28.03.2013 Gazette 2013/13)**

(54) **FIBRE OPTIQUE MICROSTRUCTUREE A GRAND COEUR ET A MODE FONDAMENTAL APLATI, ET PROCEDE DE FABRICATION DE CELLE CI, APPLICATION A LA MICROFABRICATION PAR LASER**

MIKROSTRUKTURIERTE GLASFASER MIT EINEM GROSSEN KERN UND EINEM FLACHFUNDAMENTMODUS, HERSTELLUNGSVERFAHREN DAFÜR UND VERWENDUNG DAVON BEI DER LASERMIKROHERSTELLUNG

MICROSTRUCTURED OPTICAL FIBRE HAVING A LARGE CORE AND A FLATTENED FUNDAMENTAL MODE, PRODUCTION METHOD THEREOF AND USE OF SAME IN LASER MICROFABRICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2011 FR 1158356**

(43) Date de publication de la demande:
**30.07.2014 Bulletin 2014/31**

(73) Titulaires:
* **Commissariat à l'Énergie Atomique et aux Énergies Alternatives**
  **75015 Paris (FR)**
* **Université Lille 1 - Sciences Et Technologies**
  **59655 Villeneuve D'ascq Cedex (FR)**
* **Centre National de la Recherche Scientifique (CNRS)**
  **75016 Paris (FR)**

(72) Inventeurs:
* **HUGONNOT, Emmanuel**
  **33400 Talence (FR)**
* **LAGO, Laure**
  **59800 Lille (FR)**
* **MUSSOT, Arnaud**
  **59260 Hellemmes (FR)**
* **QUIQUEMPOIS, Yves**
  **59520 Marquette Lez Lille (FR)**

* **BOUWMANS, Géraud**
  **59560 Villeneuve d'Ascq Cedex (FR)**
* **BIGOT, Laurent**
  **59260 Hellemmes (FR)**
* **VALENTIN, Constance**
  **59170 Croix (FR)**

(74) Mandataire: **Ahner, Philippe et al**
**BREVALEX**
**95, rue d'Amsterdam**
**75378 Paris Cedex 8 (FR)**

(56) Documents cités:
* **WANG C C ET AL: "Photonic crystal fiber with a flattened fundamental mode for the fiber lasers",** OPTICS COMMUNICATIONS, NORTH-HOLLAND PUBLISHING CO. AMSTERDAM, NL, vol. 282, no. 11, 1 juin 2009 (2009-06-01) , pages 2232-2235, XP026038745, ISSN: 0030-4018, DOI: 10.1016/J.OPTCOM.2009.02.049 [extrait le 2009-03-10] cité dans la demande
* **JAY W. DAWSON: "Large flattened-mode optical fiber for reduction of nonlinear effects in optical fiber lasers",** PROCEEDINGS OF SPIE, vol. 5335, 1 janvier 2004 (2004-01-01), pages 132-139, XP055028977, ISSN: 0277-786X, DOI: 10.1117/12.529746 cité dans la demande

**(Cont. page suivante)**

• GATHAK A K ET AL: "Design of Waveguide Refractive Index Profiel to Obtain Flat Modal Field", PROCEEDINGS OF SPIE, SPIE, vol. 3666, 1 janvier 1998 (1998-01-01), pages 40-44, XP002328355, ISSN: 0277-786X, DOI: 10.1117/12.347957 cité dans la demande

**Description**

**DOMAINE TECHNIQUE**

La présente invention concerne une fibre optique microstructurée à grand coeur (en anglais, *large core*), permettant d'obtenir un mode fondamental aplati, ainsi qu'un procédé de fabrication de cette fibre.

Par « grand coeur », on entend un coeur dont le diamètre vaut au moins 10 $\mu$m. Et par « mode fondamental aplati », on entend un mode fondamental dont l'intensité a un profil transverse aplati ; il convient de noter que le diamètre du mode fondamental est alors peu différent du diamètre du coeur ; et lorsque ce dernier est grand (supérieur ou égal à 10 $\mu$m), le diamètre du mode fondamental l'est donc aussi.

L'invention s'applique notamment aux procédés de microfabrication par laser, par exemple aux procédés de marquage par laser et aux procédés de découpe par laser, ou aux procédés reliés à l'interaction lumière-tissus biologiques pour la thérapie et les diagnostics.

**ÉTAT DE LA TECHNIQUE ANTÉRIEURE**

Afin d'obtenir une fibre optique à mode fondamental aplati, il est connu de placer, autour du coeur de la fibre, un anneau dont l'indice optique est légèrement supérieur à celui dudit coeur.

A ce sujet, on se reportera au document [1] qui, comme les autres documents [2] à [7] cités par la suite, est mentionné à la fin de la présente description.

Toutefois, la fibre optique décrite dans le document [1] présente l'inconvénient d'avoir un coeur de faible diamètre.

L'utilisation d'un anneau autour d'un grand coeur dopé aux terres rares est connue par les documents [2] et [3]. Mais la fibre optique dont il est question dans ces documents est multimode et, pour obtenir un seul mode, à savoir le mode fondamental, à la sortie de cette fibre, on effectue une discrimination par le gain. En effet, par rapport aux autres modes, le mode fondamental aplati possède un meilleur recouvrement sur le coeur dopé.

Il s'agit de la seule réalisation expérimentale d'un large mode aplati que l'on connaisse dans l'état de la technique. L'image expérimentale du mode obtenu à la sortie de la fibre se trouve à la figure 7 du document [4]. Le profil obtenu est très imparfait. Cela est attribué à la réalisation pratique de la fibre, qui ne permet pas d'obtenir des sauts d'indice parfaits.

Une fibre optique permettant un confinement du mode au moyen d'une structure à trous d'air, ainsi qu'un aplatissement du mode au moyen d'un anneau, est connue par le document [5]. Le rapport d/$\Lambda$ du diamètre d des trous d'air de la microstructure décrite, à l'espacement A de ces trous, est de l'ordre de 0,4 ; cela conduit à un coeur multimode pour ce type de structure. Toutefois, aucune démonstration expérimentale n'est donnée.

Les paramètres de la fibre décrite dans le document [5] semblent en outre irréalistes. En particulier, la différence d'indice optique entre l'anneau et le coeur est extrêmement faible - elle vaut $3 \times 10^{-4}$ - et elle est extrêmement difficile, voire impossible, à obtenir lors de la fabrication de la fibre.

Une fibre optique microstructurée, à coeur dopé très petit (quelques micromètres de diamètre) et sans anneau, est également connue par le document [6].

En fait, on ne connaît actuellement aucune solution satisfaisante pour obtenir, à la sortie d'une fibre optique passive, un seul mode aplati ayant un diamètre au moins égal à 10 $\mu$m :

- les fibres à coeur passif proposées dans les documents [1] et [6] ne permettent d'obtenir qu'une faible taille de mode (aire effective inférieure à 100 $\mu$m$^2$);

- l'aspect multimode de la conception de la fibre connue par le document [2] oblige à utiliser cette fibre lorsqu'une amplification est nécessaire, afin de bénéficier de la discrimination par le gain. Or, dans certains cas (mise en forme spatiale, transport d'énergie, amplification non-linéaire par exemple), il est indispensable de disposer d'une fibre passive ; remarquons que dans de tels cas, la discrimination par la courbure est toutefois possible ;

- les paramètres de la fibre proposée dans le document [5], notamment l'écart d'indice de l'anneau de cette fibre, est extrêmement difficile, voire impossible, à réaliser expérimentalement.

D'une manière générale, les conceptions proposées dans l'état de la technique ne sont pas réalistes car elles ne prennent pas en compte les contraintes de fabrication. Dans l'état de la technique, on ne trouve d'ailleurs qu'une seule réalisation expérimentale d'une fibre à mode fondamental aplati (voir le document [2]).

Cette réalisation est toutefois peu convaincante car le faisceau lumineux obtenu à la sortie de la fibre ne peut être considéré comme aplati (voir le document [4]). Les auteurs du document [2] reconnaissent d'ailleurs que la réalisation pratique de la fibre ne permet pas d'obtenir des sauts d'indice suffisamment contrôlés.

**EXPOSÉ DE L'INVENTION**

La présente invention a pour objet une fibre optique microstructurée, ne présentant pas les inconvénients de celles qui sont mentionnées plus haut.

De façon précise, la présente invention a pour objet une fibre optique microstructurée à grand coeur et à mode fondamental aplati, comprenant :

- un coeur dont le diamètre vaut au moins 10 $\mu$m,
- un anneau qui entoure le coeur, dont l'indice optique dépasse celui du coeur d'une valeur $\Delta$n et dont le rayon externe dépasse le rayon interne d'une valeur $\Delta$R, et
- une gaine optique (en anglais, *optical cladding*) qui entoure l'anneau et comporte une matrice contenant des inclusions, par exemple des trous d'air longitudinaux, dont l'indice optique est différent de celui de la matrice, l'indice optique moyen équivalent $n_{FSM}$ de la gaine étant inférieur à l'indice optique du coeur,

caractérisée en ce que $\Delta$n est supérieur à $10^{-3}$ et $\Delta$R est lié à $\Delta$n par la relation $\Delta R = \alpha/(\Delta n)^{\beta}$ où $\alpha$ est dans l'intervalle allant de $5 \times 10^{-4}$ $\mu$m à $5 \times 10^{-2}$ $\mu$m, $\beta$ est dans l'intervalle allant de 0,5 à 1,5 et $\alpha$ et $\beta$ dépendent de la longueur d'onde $\lambda$ de la lumière destinée à être guidée par la fibre optique microstructurée, du nombre d'inclusions manquantes dans celle-ci (à cause de la présence du coeur et de l'anneau), du diamètre d des inclusions, de l'espacement A de celles-ci et de l'indice optique du coeur.

Selon un mode de réalisation préféré de la fibre optique microstructurée, objet de l'invention, le nombre d'inclusions manquantes est égal à 7. On dit alors que la fibre présente un défaut de 7.

Le coeur de la fibre optique microstructurée, objet de l'invention, peut être dopé ou non dopé.

Par exemple, il peut être dopé par des entités luminescentes (par exemple par des ions de terres rares) ou non dopé par de telles entités.

Selon un premier mode de réalisation particulier de l'invention, le coeur est en silice non dopée, $\beta$ vaut 1 et $\alpha$ est donné par la formule suivante :

$$\alpha = 2,489 \times 10^{-2} (d/\Lambda)^{0,25} \lambda^2/\Lambda$$

où $\alpha$ est exprimé en micromètres lorsque d, $\Lambda$ et $\lambda$ le sont également.

Selon un deuxième mode de réalisation particulier de l'invention, le coeur est en silice dopée, par exemple à l'ytterbium et l'aluminium ou un autre codopant tel que le phosphore ou le germanium, de manière à augmenter l'indice optique de la silice pure d'environ 1, $5 \times 10^{-3}$, $\beta$ vaut 0, 905 et $\alpha$ est donné par la formule suivante :

$$\alpha = 1,046 \times 10^{-2} (\lambda/\Lambda)^{0,19}$$

où $\alpha$ est exprimé en micromètres lorsque $\Lambda$ et $\lambda$ le sont également.

Selon un troisième mode de réalisation particulier de l'invention, le coeur est en silice dopée, par exemple à l'ytterbium et l'aluminium ou un autre codopant tel que le phosphore ou le germanium, de manière à augmenter l'indice optique de la silice pure d'environ $5 \times 10^{-3}$, $\beta$ vaut 0,87 et $\alpha$ est donné par la formule suivante :

$$\alpha = 1,327 \times 10^{-2} (\lambda/\Lambda)^{0,05}$$

où $\alpha$ est exprimé en micromètres lorsque $\Lambda$ et $\lambda$ le sont également.

La présente invention concerne aussi un procédé de fabrication de la fibre optique microstructurée, objet de l'invention, dans lequel :

- on choisit $\lambda$,
- on choisit le nombre d'inclusions manquantes,
- on choisit le rapport d/$\Lambda$,
- on choisit le taux T de dopage du coeur, T étant supérieur ou égal à 0,
- on choisit $\Lambda$,
- on choisit $\Delta$n, et
- on détermine $\Delta$R par ladite relation de façon à obtenir un mode fondamental aplati à la sortie de la fibre lorsqu'on injecte une lumière de longueur d'onde λ à l'entrée de celle-ci, et

- on fabrique la fibre optique microstructurée, avec le nombre d'inclusions et les paramètres d, T, Λ, Δn ainsi choisis, et le paramètre ΔR ainsi déterminé.

La présente invention concerne en outre un procédé de microfabrication par laser, dans lequel on utilise la fibre optique microstructurée, objet de l'invention, pour guider la lumière émise par le laser.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1A est une vue en coupe transversale schématique d'un exemple de la fibre optique microstructurée, objet de l'invention, et la figure 1B montre le profil radial de l'indice optique pour cet exemple de fibre,
- la figure 2 montre les variations de l'épaisseur ΔR de l'anneau, permettant l'obtention d'un profil aplati, pour la fibre optique de la figure 1A, en fonction du contraste d'indice Δn, pour un défaut de 7 et diverses valeurs de l'espacement Λ,
- la figure 3A montre le profil transverse du mode guidé dans cette fibre lorsque A vaut 30 μm et Δn vaut $2\times10^{-3}$, et la figure 3B montre les variations de l'intensité lumineuse I dans la fibre, suivant l'axe X de la figure 3A, qui fait un angle de π/6 (30°) avec l'axe horizontal x de la figure 3A,
- la figure 4 est un diagramme de variations de planéité r.m.s (moyenne quadratique) exprimées en %, en fonction de Δn et ΔR, lorsque A vaut 30 μm, et
- la figure 5 montre le profil radial de l'indice optique d'une fibre optique conforme à l'invention.

## EXPOSÉ DÉTAILLÉ DE MODES DE RÉALISATION PARTICULIERS

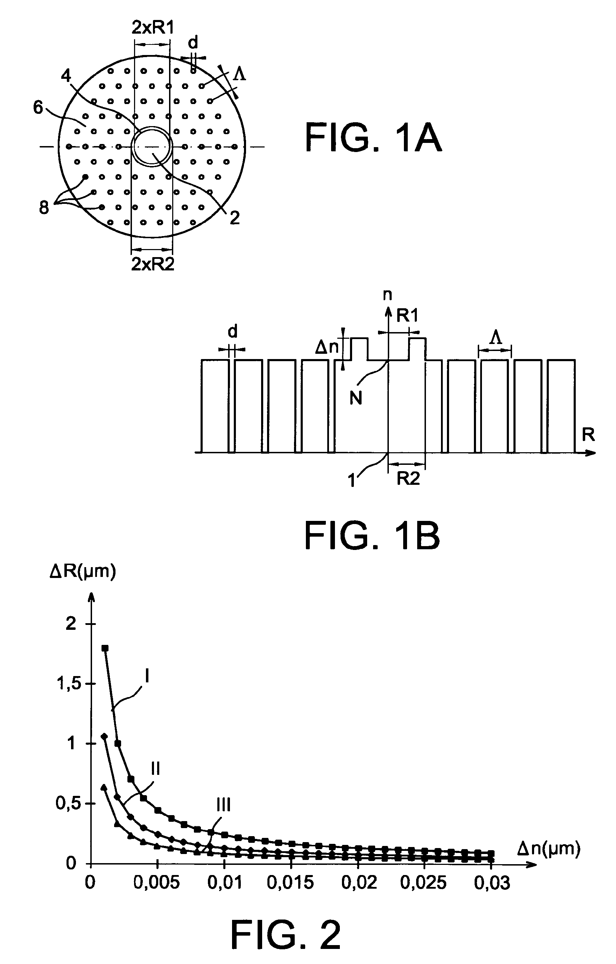

La figure 1A est une vue en coupe transversale schématique d'un exemple de la fibre optique microstructurée, objet de l'invention, permettant d'obtenir un mode fondamental aplati, de grand diamètre. La figure 1B montre le profil d'indice de la fibre représentée sur la figure 1A, suivant une coupe horizontale, c'est-à-dire les variations de l'indice optique n en fonction du rayon R (profil radial).

L'intérêt de la microstructuration est notamment d'assurer un comportement quasi-monomode, même pour un coeur de grande taille par rapport à la longueur d'onde λ de la lumière qui se propage dans la fibre.

La fibre représentée sur la figure 1A comprend :

- une partie centrale constituée d'un coeur 2 dont l'indice optique est noté N, et d'un anneau 4 dont l'indice optique est égal à N+Δn où Δn (saut d'indice) est strictement positif, et
- une gaine optique 6 entourant l'anneau 4, comportant des inclusions d'air et ayant un indice optique moyen équivalent $n_{FSM}$ inférieur à l'indice optique N du coeur 2.

Plus précisément, dans l'exemple représenté sur la figure 1A, la gaine optique 6 comporte des trous longitudinaux 8 qui sont parallèles à l'axe de la fibre. La gaine 6 est constituée du même matériau que le coeur mais, du fait de l'existence de ces trous, l'indice $n_{FSM}$ est inférieur à N.

Dans l'exemple, le coeur 2 est en silice pure ; l'anneau 4 a une épaisseur sub-micronique et il est en silice légèrement dopée au germanium ; le rayon interne de l'anneau est noté R1, son rayon externe R2 et son épaisseur ΔR (ΔR=R2-R1) ; et la gaine 6 est de type air-silice. Remarquons que le diamètre du coeur 2 vaut 2R1, avec 2R1≥10 μm conformément à l'invention.

Les paramètres de la microstructuration sont le diamètre d des trous d'air 8 et l'espacement A de ceux-ci.

Comme on le voit sur la figure 1A, afin de constituer le coeur 2 entouré par l'anneau 4, les sept trous ou capillaires centraux sont remplacés par le matériau solide, constitutif du coeur et constitutif de l'anneau. On dit que la fibre présente un défaut de 7.

Cette géométrie permet d'agrandir la taille du mode fondamental sans trop agrandir le pas (en anglais, *pitch*) Λ du réseau de trous. On rappelle que pour une telle géométrie, il faudrait un rapport d/Λ égal à 0,046 pour obtenir un seul mode de propagation quel que soit λ/Λ (voir le document [7]).

Le rapport d/Λ doit être le plus petit possible (typiquement d/Λ inférieur à 0,25) pour que le nombre de modes guidés soit le plus faible possible.

Le rayon externe R2 de l'anneau 4 est imposé par la fabrication de la fibre. A cause du positionnement des capillaires utilisés pour former la gaine 6, il faut au minimum un espacement égal à Λ/2 entre le cylindre externe, de rayon R2, délimitant l'anneau 4, et le centre du premier trou d'air rencontré, ce qui correspond à un rayon externe maximum égal à $\left(2\sqrt{3}-1\right)\dfrac{\Lambda}{2}$ .

Le mode aplati est obtenu lorsque le mode fondamental de l'anneau atteint sa longueur d'onde de coupure (soit lorsque l'indice effectif de ce mode devient égal à l'indice de réfraction du matériau du coeur). La planéité du profil d'intensité transverse du mode fondamental est optimisée pour le couple (Δn ; ΔR). Un exemple d'optimisation pour d/Λ = 0,25 est donnée sur la figure 2. On rappelle que Δn (saut d'indice ou contraste d'indice) est la différence entre l'indice optique de l'anneau 4 et celui du coeur 2, et que ΔR représente l'épaisseur de l'anneau.

Plus précisément, la figure 2 donne l'épaisseur de l'anneau permettant l'obtention d'un profil aplati, en fonction du contraste d'indice, pour un défaut de 7, pour plusieurs espacements A entre les trous d'air, à savoir Λ=8,5 μm (courbe I), Λ=17 μm (courbe II) et Λ=30 μm (courbe III) et pour d/Λ = 0,25.

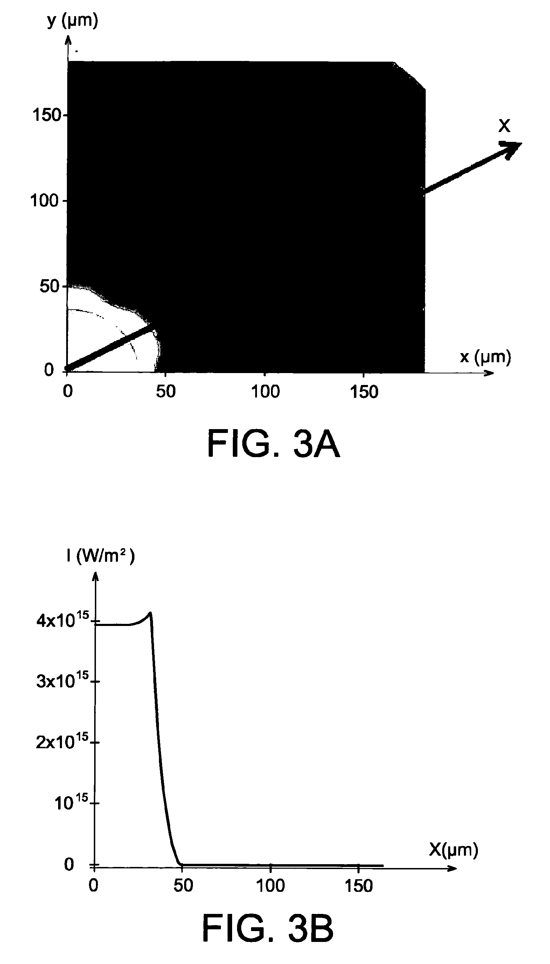

La figure 3A montre le profil transverse du mode guidé dans la fibre microstructurée, représentée sur la figure 1A (défaut de 7), pour un pas Λ de 30 μm, un contraste d'indice Δn de 2x10⁻³ et un rapport d/Λ de 0,25. Pour ce contraste d'indice, la figure 2 montre que l'épaisseur ΔR de l'anneau doit être égal à 305 nm.

La figure 3B montre les variations de l'intensité lumineuse I (en W/m²) suivant l'axe X de la figure 3A, qui fait un angle de π/6 rd (30°) avec l'axe horizontal x de la figure 3A.

On précise que seul un quart de la fibre est représenté sur la figure 3A par raison de symétrie. L'aire effective du mode fondamental obtenu est alors de 6420μm² pour la structure entière.

La structure représentée sur la figure 1A et la variation de l'épaisseur de l'anneau en fonction du contraste d'indice, donné par la figure 2, permettent d'obtenir un mode fondamental aplati. Contrairement aux propositions de conception qui sont présentées dans l'état de la technique, les paramètres de la fibre optique sont calculés, dans la présente invention, en prenant en compte les contraintes de fabrication.

Il s'agit donc d'une amélioration des dimensionnements connus dans l'état de la technique. Cette amélioration permet de résoudre le problème de la fabrication d'une fibre optique à mode fondamental aplati, problème qui n'avait pas été résolu jusqu'à présent.

Les contrastes d'indice Δn, que l'on peut lire sur la figure 2, sont réalisables, par exemple, par la technique OVD, c'est-à-dire la technique de dépôt externe en phase vapeur (en anglais, *outside vapor deposition*), soit par dépôt de silice présentant un indice N+Δn autour d'un barreau de silice pure (indice N), soit par dépôt de silice pure (indice N) autour d'un coeur de silice dopée, présentant un indice N-Δn. La technologie actuelle de fabrication permet de contrôler les dimensions de l'anneau à quelques pourcents près et d'obtenir un contraste d'indice à 5x10⁻⁴ près.

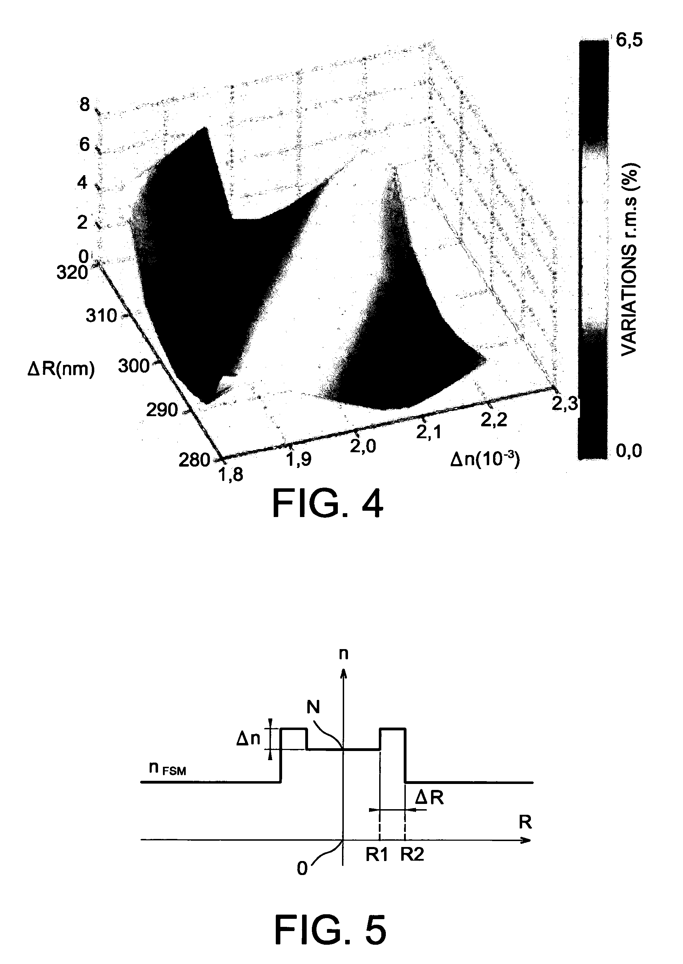

La figure 4 est un diagramme des variations de la planéité (variations r.m.s. exprimées en %) pour une fibre optique ayant un défaut de 7, un pas Λ de 30 μm et un rapport d/Λ de 0,25, en fonction des paramètres Δn et ΔR.

Sur la figure 4, on voit que Δn varie autour de 2x10⁻³ et ΔR autour de 300 nm. Ces variations sont calculées à partir du taux de modulation $M_{spa} = \dfrac{\sqrt{\left\langle I^2(x,y)\right\rangle_{80\%surface} - \left\langle I(x,y)\right\rangle^2_{80\%surface}}}{\left\langle I(x,y)\right\rangle_{80\%surface}}$ où le symbole <> correspond à la valeur moyenne calculée sur 80% de la surface du mode.

Les valeurs des variations, définies par $M_{spa}$, sont donc inférieures à 7%, même pour une plage de valeurs de ΔR (différence de rayons) plus importante que la précision typique de fabrication.

Dans la présente invention, les paramètres de la structuration de la fibre optique ainsi que les incertitudes sur ces paramètres sont compatibles avec les technologies de fabrication actuelles, contrairement aux fibres optiques connues dans l'état de la technique.

En particulier, bien que le dimensionnement de la fibre optique divulguée par le document [5] semble proche du dimensionnement d'une fibre optique conforme à la présente invention, cette fibre, connue par le document [5], n'est pas réalisable expérimentalement, contrairement à une fibre conforme à l'invention.

Il convient en outre de noter que, dans la présente invention, afin d'obtenir un dimensionnement prenant en compte les contraintes de fabrication, il est nécessaire de réaliser des optimisations numériques. Les paramètres utilisés ne sont donc pas obtenus directement à partir d'une loi ou de valeurs connues dans l'état de la technique.

On notera aussi que, malgré le fort intérêt que représente une fibre à mode fondamental aplati, on ne trouve dans l'état de la technique qu'une seule réalisation expérimentale d'une telle fibre (voir le document [2]). Cette réalisation expérimentale connue est d'ailleurs peu convaincante car l'intensité du faisceau obtenu à la sortie de la fibre est très faiblement aplati (voir le document [4]). Cela montre clairement que le dimensionnement n'est pas trivial.

On précise ci-après le raisonnement utilisé pour le dimensionnement d'une fibre optique conforme à l'invention :

- on choisit la longueur d'onde λ de la lumière guidée dans la fibre (par exemple λ=1 μm ou λ=1,55 μm),
- on choisit le nombre de capillaires remplacés par un coeur solide dans la structure à trous (par exemple un défaut de 7),

- on choisit le rapport d/Λ (par exemple d/Λ=0,12),
- on choisit le taux de dopage T du coeur par des ions luminescents(T≥0), ce qui détermine l'indice du coeur N (voir la figure 5), et
- on choisit l'espacement entre les trous d'air A, ce qui détermine le diamètre des trous d, le rayon externe R2 (figure 5) et l'indice moyen équivalent $n_{FSM}$ de la gaine optique.

Il existe alors une relation entre l'épaisseur ΔR de l'anneau et le contraste d'indice Δn. Cette relation est la

suivante : $\Delta R = \dfrac{\alpha}{(\Delta n)^{\beta}}$  (1).

Les valeurs des paramètres α(exprimé en μm) et β dépendent des paramètres choisis précédemment (longueur d'onde λ, valeur du défaut, rapport d/Λ, valeur N de l'indice optique du coeur résultant de l'éventuel dopage, espacement Λ entre les trous d'air).

Les valeurs des paramètres α et β sont données ci-après pour différentes configurations.

I) Le coeur est en silice non dopée.
α est donné par la formule suivante :

$$\alpha = 2,489 \times 10^{-2} (d/\Lambda)^{0,25} \lambda^2/\Lambda$$

où α est exprimé en micromètres lorsque d, Λ et λ sont également exprimés en micromètres ; et β vaut 1.

II) Le coeur est en silice dopée (par exemple à l'ytterbium et à l'aluminium ou un autre codopant tel que le phosphore ou le germanium); et le dopage entraîne une différence d'indice par rapport à de la silice pure d'environ δn = 1,5x10⁻³.
α est donné par la formule suivante :

$$\alpha = 1,046 \times 10^{-2} (\lambda/\Lambda)^{0,19}$$

où α est exprimé en micromètres lorsque Λ et λ sont également exprimés en micromètres ; et β vaut 0,905.

III) Le coeur est dopé (par exemple à l'ytterbium et à l'aluminium ou un autre codopant tel que le phosphore ou le germanium); et le dopage entraîne une différence d'indice par rapport à de la silice pure d'environ δn = 5x10⁻³.
α est donné par la formule suivante :

$$\alpha = 1,327 \times 10^{-2} (\lambda/\Lambda)^{0,05}$$

où α est exprimé en micromètres lorsque Λ et λ sont également exprimés en micromètres ; et β vaut 0,87.

D'une manière générale, plus le dopage du coeur est important, plus la variation de α en fonction de A est faible (la structure de la gaine optique a moins d'effet sur les valeurs optimales des paramètres Δn et ΔR relatifs à l'anneau).
Il est important de noter que les variations entre l'épaisseur ΔR de l'anneau et le contraste d'indice Δn, qui résultent de la relation (1) et des valeurs ci-dessus, sont différentes de celles qui sont données par la formule analytique que l'on trouve dans le document[5]. Cette formule donne des résultats trop approximatifs pour que la conception qui en résulte donne un mode fondamental aplati.
On précise que, d'une manière générale, on a : Δn>10⁻³, 5x10⁻⁴ μm≤α≤5x10⁻² μm, et 0,5≤β≤1,5.
La présente invention a divers intérêts et applications dans le domaine des systèmes lasers fibrés :

- elle permet de transformer un faisceau lumineux dont l'intensité a un profil gaussien en un faisceau lumineux dont l'intensité a un profil aplati (mise en forme spatiale) ;
- elle permet d'optimiser l'intensité du faisceau en champ lointain pour des applications de micro-usinage laser (notamment le marquage et la soudure) ;
- par rapport à une fibre passive (c'est-à-dire non luminescente), dont le mode fondamental a une aire effective équivalente mais dans laquelle le mode fondamental est gaussien, la diminution de l'intensité crête, due au mode aplati, permet d'augmenter l'énergie (ou la puissance) qu'il est possible de propager (d'où des applications au transport de faisceaux de forte énergie) ou qu'il est possible d'obtenir à la sortie des dispositifs fondés sur l'amplification non-linéaire (notamment les dispositifs utilisant un mélange à quatre ondes et les dispositifs utilisant l'effet Raman) ; et

- si l'on dope le coeur de la fibre par des ions luminescents, l'invention permet de réaliser des lasers et des amplificateurs fibrés à mode plat, ce qui permet d'augmenter l'énergie (ou la puissance) qu'il est possible d'extraire de tels systèmes.

Dans les exemples donnés plus haut, on a considéré une fibre optique microstructurée ayant un défaut de 7 (7 trous manquants). Mais la présente invention n'est pas limitée à cette valeur : la fibre pourrait avoir un défaut d'une autre valeur, par exemple 19, voire 1.

De plus, dans les exemples donnés plus haut, on a considéré des inclusions d'air (trous longitudinaux) dans la gaine optique de la fibre microstructurée. Mais d'autres inclusions sont possibles, par exemple des inclusions de silice dopée ou des inclusions d'autres gaz tels que l'argon par exemple.

Les documents cités dans la présente description sont les suivants :

[1] A.K. Ghatak, I.C. Goyal et R. Jindal, "Design of Waveguide Refractive Index Profile to Obtain Flat Modal Field", Proc. SPIE 3666, 40-44 (1998)

[2] J.W. Dawson, R. Beach, I. Jovanovic, B. Wattellier, Z. Liao, S.A. Payne et C.P.J. Barty, "Large flattened mode optical fiber for high output energy pulsed fiber lasers", paper CWD5, CLEO 2003

[3] J.W. Dawson, R.J. Beach, S.A. Payne, M.D. Feit, C.P.J. Barty et Z.M. Liao, *"Flattened Mode Cylindrical and Ribbon Fibers and Amplifiers",* US 2004/0247272 (9 décembre 2004)

[4] J.W. Dawson, R. Beach, I. Jovanovic, B. Wattelier, Z. Liao, S.A. Payne et C.P.J. Barty, "Large flattened mode optical fiber for reduction of non-linear effects in optical fiber lasers", Proc. SPIE 5335, 132-139 (2004)

[5] C. Wang, F. Zhang, Y. Lu, C. Liu, R. Geng et T. Ning, "Photonic crystal fiber with a flattened fundamental mode for the fiber lasers", Opt. Commun. 282, 2232-2235 (2009)

[6] X. Lu, Q. Zhou, J. Qiu, C. Zhu et D. Fan, "Design guidelines and characteristics of beam-shaping microstructure optical fibers", Opt. Commun. 259, 636-639 (2006)

[7] K. Saitoh, Y. Tsuchida, M. Koshiba et N. Asger Mortensen, « Endlessly single-mode holey libers : the influence of core design », Opt. Express 26, 10833 (2005).

## Revendications

1. Fibre optique microstructurée à grand coeur et à mode fondamental aplati, comprenant :

   - un coeur (2) dont le diamètre vaut au moins 10 $\mu$m,
   - un anneau (4) qui entoure le coeur, dont l'indice optique dépasse celui du coeur d'une valeur $\Delta$n et dont le rayon externe dépasse le rayon interne d'une valeur $\Delta$R, et
   - une gaine optique (6) qui entoure l'anneau et comporte une matrice contenant des inclusions, par exemple des trous d'air longitudinaux (8), dont l'indice optique est différent de celui de la matrice, l'indice optique moyen équivalent $n_{FSM}$ de la gaine étant inférieur à l'indice optique du coeur,

   **caractérisée en ce que** $\Delta$n est supérieur à $10^{-3}$ et $\Delta$R est lié à $\Delta$n par la relation $\Delta R = \alpha/(\Delta n)^{\beta}$ où $\alpha$ est dans l'intervalle allant de $5 \times 10^{-4}$ $\mu$m à $5 \times 10^{-2}$ $\mu$m, $\beta$ est dans l'intervalle allant de 0,5 à 1,5 et $\alpha$ et $\beta$ dépendent de la longueur d'onde $\lambda$ de la lumière destinée à être guidée par la fibre optique microstructurée, du nombre d'inclusions manquantes dans celle-ci, du diamètre $\underline{d}$ des inclusions (8), de l'espacement $\Lambda$ de celles-ci et de l'indice optique du coeur (2).

2. Fibre optique microstructurée selon la revendication 1, dans laquelle le nombre d'inclusions manquantes est égal à 7.

3. Fibre optique microstructurée selon l'une quelconque des revendications 1 et 2, dans laquelle le coeur (2) est non dopé.

4. Fibre optique microstructurée selon la revendication 3, dans laquelle le coeur (2) est en silice non dopée, $\beta$ vaut 1 et $\alpha$ est donné par la formule suivante :

$$\alpha = 2,489 \times 10^{-2} (d/\Lambda)^{0,25} \lambda^2/\Lambda$$

où $\alpha$ est exprimé en micromètres lorsque d, $\Lambda$ et $\lambda$ le sont également.

**5.** Fibre optique microstructurée selon l'une quelconque des revendications 1 et 2, dans laquelle le coeur (2) est dopé.

**6.** Fibre optique microstructurée selon la revendication 5, dans laquelle le coeur (2) est en silice dopée, par exemple à l'ytterbium et l'aluminium ou un autre codopant tel que le phosphore ou le germanium, de manière à augmenter l'indice optique de la silice pure d'environ $1,5 \times 10^{-3}$, $\beta$ vaut 0, 905 et $\alpha$ est donné par la formule suivante :

$$\alpha = 1,046 \times 10^{-2} (\lambda/\Lambda)^{0,19}$$

où $\alpha$ est exprimé en micromètres lorsque $\Lambda$ et $\lambda$ le sont également.

**7.** Fibre optique microstructurée selon la revendication 5, dans laquelle le coeur (2) est en silice dopée, par exemple à l'ytterbium et l'aluminium ou un autre codopant tel que le phosphore ou le germanium, de manière à augmenter l'indice optique de la silice pure d'environ $5 \times 10^{-3}$, $\beta$ vaut 0,87 et $\alpha$ est donné par la formule suivante :

$$\alpha = 1,327 \times 10^{-2} (\lambda/\Lambda)^{0,05}$$

où $\alpha$ est exprimé en micromètres lorsque $\Lambda$ et $\lambda$ le sont également.

**8.** Procédé de fabrication de la fibre optique microstructurée selon la revendication 1, dans lequel :

- on choisit $\lambda$,
- on choisit le nombre d'inclusions manquantes,
- on choisit le rapport d/$\Lambda$,
- on choisit le taux T de dopage du coeur (2), T étant supérieur ou égal à 0,
- on choisit $\Lambda$,
- on choisit $\Delta$n,
- on détermine $\Delta$R par ladite relation de façon à obtenir un mode fondamental aplati à la sortie de la fibre lorsqu'on injecte une lumière de longueur d'onde $\lambda$ à l'entrée de celle-ci, et
- on fabrique la fibre optique microstructurée, avec le nombre d'inclusions et les paramètres d, T, $\Lambda$, $\Delta$n ainsi choisis, et le paramètre $\Delta$R ainsi déterminé.

**9.** Procédé de microfabrication par laser, dans lequel on utilise la fibre optique microstructurée selon l'une quelconque des revendications 1 à 7 pour guider la lumière émise par le laser.

**Patentansprüche**

**1.** Mikrostrukturierte optische Faser mit einem großen Kern und einer flachen Fundamentalmode, umfassend:

- einen Kern (2), dessen Durchmesser wenigstens 10 $\mu m$ beträgt,
- einen Ring (4), der den Kern umgibt und dessen Brechungsindex jenen des Kerns um einen Wert $\Delta n$ übersteigt, und dessen Außenradius den Innenradius um einen Wert $\Delta R$ übersteigt, und
- eine optische Ummantelung (6), die den Ring umgibt und eine Matrix umfasst, die Einschlüsse enthält, beispielsweise longitudinale Luftlöcher (8), deren Brechungsindex von jenem der Matrix verschieden ist, wobei der mittlere Brechungsindex gleich $n_{FSM}$ der Ummantelung kleiner als der Brechungsindex des Kerns ist,

**dadurch gekennzeichnet, dass** $\Delta n$ größer als $10^{-3}$ ist, und dass $\Delta R$ mit $\Delta n$ über die Relation $\Delta R = \alpha / (\Delta n)^\beta$ verknüpft ist, wobei $\alpha$ in dem Intervall von $5 \times 10^{-4}$ $\mu m$ bis $5 \times 10^{-2}$ $\mu m$ liegt, $\beta$ in dem Intervall von 0,5 bis 1,5 liegt, und $\alpha$

und $\beta$ von der Wellenlänge $\lambda$ des Lichts abhängen, das durch die mikrostrukturierte optische Faser geführt werden soll, von der Zahl fehlender Einschlüsse in selbiger, vom Durchmesser $\underline{d}$ der Einschlüsse (8), vom Zwischenabstand A der selben und vom Brechungsindex des Kerns (2).

2. Mikrostrukturierte optische Faser nach Anspruch 1, bei der die Zahl fehlender Einschlüsse gleich 7 ist.

3. Mikrostrukturierte optische Faser nach einem der Ansprüche 1 und 2, bei der der Kern (2) nicht dotiert ist.

4. Mikrostrukturierte optische Faser nach Anspruch 3, bei der der Kern (2) aus nicht dotiertem Siliziumdioxid ist, $\beta$ 1 beträgt und $\alpha$ durch die folgende Formel gegeben ist:

$$\alpha = 2{,}489 \times 10^{-2}(d\,/\,\Lambda)^{0{,}25}\lambda^2\,/\,\Lambda$$

wobei $\alpha$ in Mikrometern ausgedrückt wird, wenn d, $\Lambda$ und $\lambda$ dies ebenfalls sind.

5. Mikrostrukturierte optische Faser nach einem der Ansprüche 1 und 2, bei der der Kern (2) dotiert ist.

6. Mikrostrukturierte optische Faser nach Anspruch 5, bei der der Kern (2) aus dotiertem Siliziumdioxid ist, beispielsweise mit Ytterbium und Aluminium oder einem anderen Dotierstoff wie zum Beispiel Phosphor oder Germanium dotiert, derart, dass der Brechungsindex des reinen Siliziumdioxids um ungefähr $1{,}5 \times 10^{-3}$ erhöht wird, $\beta$ 0,905 beträgt und $\alpha$ durch die nachfolgende Formel gegeben ist:

$$\alpha = 1{,}046 \times 10^{-2}\,(\lambda\,/\,\Lambda)^{0{,}19}$$

wobei $\alpha$ in Mikrometern ausgedrückt ist, wenn A und $\lambda$ dies ebenfalls sind.

7. Mikrostrukturierte optische Faser nach Anspruch 5, bei der der Kern (2) aus dotiertem Siliziumdioxid ist, beispielsweise mit Ytterbium und Aluminium oder einem anderen Dotierstoff wie zum Beispiel Phosphor oder Germanium dotiert, derart, dass der Brechungsindex des reinen Siliziumdioxids um ungefähr $5 \times 10^{-3}$ erhöht wird, $\beta$ 0,87 beträgt und $\alpha$ durch die nachfolgende Formel gegeben ist:

$$\alpha = 1{,}327 \times 10^{-2}(\lambda\,/\,\Lambda)^{0{,}05}$$

wobei $\alpha$ in Mikrometern ausgedrückt ist, wenn A und $\lambda$ dies ebenfalls sind.

8. Verfahren zur Herstellung der mikrostrukturierten optischen Faser nach Anspruch 1, bei dem:

    - man $\lambda$ wählt,
    - man die Zahl fehlender Einschlüsse wählt,
    - man das Verhältnis d / A wählt,
    - man die Dotierrate T des Kerns (2) wählt, wobei T größer oder gleich 0 ist,
    - man $\Lambda$ wählt,
    - man $\Delta n$ wählt,
    - man $\Delta R$ durch die Relation derart bestimmt, dass man eine flache Fundamentalmode am Ausgang der Faser erhält, wenn man an ihrem Eingang Licht der Wellenlänge $\lambda$ injiziert, und
    - man die mikrostrukturierte optische Faser mit der Zahl von Einschlüssen und den Parametern d, T, A, $\Delta n$ gemäß dieser Wahl und dem derart bestimmten Parameter $\Delta R$ herstellt.

9. Verfahren zur Laser-Mikrofabrikation, bei dem man die mikrostrukturierte optische Faser nach einem der Ansprüche 1 bis 7 verwendet, um das vom Laser emittierte Licht zu führen.

**Claims**

1. Microstructured optical fibre having a large core and a flattened fundamental mode, comprising:

    - a core (2) wherein the diameter equals at least 10 $\mu$m,
    - a ring (4) surrounding the core, wherein the optical index exceeds that of the core by a value $\Delta$n and wherein the outer radius exceeds the inner radius by a value $\Delta$R, and
    - an optical cladding (6) surrounding the ring and comprising a matrix containing inclusions, for example longitudinal air gaps (8), wherein the optical index is different to that of the matrix, the equivalent mean optical index $n_{FSM}$ of the cladding being less than the optical index of the core,

    **characterised in that** $\Delta$n is greater than $10^{-3}$ and $\Delta$R is linked with $\Delta$n by the equation $\Delta R = \alpha/(\Delta n)^{\beta}$ where $\alpha$ is in the interval ranging from $5 \times 10^{-4}$ $\mu$m to $5 \times 10^{-2}$ $\mu$m, $\beta$ is in the interval ranging from 0.5 to 1.5 and $\alpha$ and $\beta$ are dependent on the wavelength $\lambda$ of the light to be guided by the microstructured optical fibre, the number of missing inclusions therein, the diameter $\underline{d}$ of the inclusions (8), the spacing $\Lambda$ thereof and the optical index of the core (2).

2. Microstructured optical fibre according to claim 1, wherein the number of missing inclusions is equal to 7.

3. Microstructured optical fibre according to any of claims 1 and 2, wherein the core (2) is not doped.

4. Microstructured optical fibre according to claim 3, wherein the core (2) is made of non-doped silica, $\beta$ equals 1 and $\alpha$ is given by the following formula:

$$\alpha = 2.489 \times 10^{-2} (d/\Lambda)^{0.25} \lambda^2/\Lambda$$

    where $\alpha$ is expressed in micrometres when d, $\Lambda$ and $\lambda$ are also expressed as such.

5. Microstructured optical fibre according to any of claims 1 and 2, wherein the core (2) is doped.

6. Microstructured optical fibre according to claim 5, wherein the core (2) is made of silica doped, for example with ytterbium and aluminium or another codopant such as phosphorus or germanium, so as to increase the optical index of pure silica by approximately $1.5 \times 10^{-3}$, $\beta$ equals 0.905 and $\alpha$ is given by the following formula:

$$\alpha = 1.046 \times 10^{-2} (\lambda/\Lambda)^{0.19}$$

    where $\alpha$ is expressed in micrometres when $\Lambda$ and $\lambda$ are also expressed as such.

7. Microstructured optical fibre according to claim 5, wherein the core (2) is made of silica doped, for example with ytterbium and aluminium or another codopant such as phosphorus or germanium, so as to increase the optical index of pure silica by approximately $5 \times 10^{-3}$, $\beta$ equals 0.87 and $\alpha$ is given by the following formula:

$$\alpha = 1.327 \times 10^{-2} (\lambda/\Lambda)^{0.05}$$

    where $\alpha$ is expressed in micrometres when $\Lambda$ and $\lambda$ are also expressed as such.

8. Method for producing the microstructured optical fibre according to claim 1, wherein:

    - $\lambda$ is chosen,
    - the number of missing inclusions is chosen,
    - the ratio d/$\lambda$ is chosen,
    - the doping content T of the core (2) is chosen, T being greater than or equal to 0,
    - $\Lambda$ is chosen,

- $\Delta n$ is chosen,
- $\Delta R$ is determined using said equation so as to obtain a flattened fundamental mode at the fibre output when light having a wavelength $\lambda$ is injected at the input thereof, and
- the microstructured optical fibre is produced, with the number of inclusions and parameters d, T, $\Lambda$, $\Delta n$ thus chosen, and the parameter $\Delta R$ determined in this way.

9. Laser microfabrication method, wherein the microstructured optical fibre according to any of claims 1 to 7 is used for guiding the light emitted by the laser.

FIG. 1A

FIG. 1B

FIG. 2

FIG. 3A

FIG. 3B

EP 2 758 816 B1

FIG. 4

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040247272 A

**Littérature non-brevet citée dans la description**

- **A.K. GHATAK ; I.C. GOYAL ; R. JINDAL.** Design of Waveguide Refractive Index Profile to Obtain Flat Modal Field. *Proc. SPIE,* 1998, vol. 3666, 40-44
- **J.W. DAWSON ; R. BEACH ; I. JOVANOVIC ; B. WATTELLIER ; Z. LIAO ; S.A. PAYNE ; C.P.J. BARTY.** Large flattened mode optical fiber for high output energy pulsed fiber lasers. *CWD5, CLEO,* 2003
- **J.W. DAWSON ; R. BEACH ; I. JOVANOVIC ; B. WATTELIER ; Z. LIAO ; S.A. PAYNE ; C.P.J. BARTY.** Large flattened mode optical fiber for reduction of non-linear effects in optical fiber lasers. *Proc. SPIE,* 2004, vol. 5335, 132-139
- **C. WANG ; F. ZHANG ; Y. LU ; C. LIU ; R. GENG ; T. NING.** Photonic crystal fiber with a flattened fundamental mode for the fiber lasers. *Opt. Commun.,* 2009, vol. 282, 2232-2235
- **X. LU ; Q. ZHOU ; J. QIU ; C. ZHU ; D. FAN.** Design guidelines and characteristics of beam-shaping microstructure optical fibers. *Opt. Commun.,* 2006, vol. 259, 636-639
- **K. SAITOH ; Y. TSUCHIDA ; M. KOSHIBA ; N. ASGER MORTENSEN.** Endlessly single-mode holey libers : the influence of core design. *Opt. Express,* 2005, vol. 26, 10833